**Europäisches Patentamt**

**European Patent Office**

**Office européen des brevets**

(11) Veröffentlichungsnummer: **0 315 810**
**A1**

## EUROPÄISCHE PATENTANMELDUNG

(21) Anmeldenummer: **88117508.7**

(22) Anmeldetag: **21.10.88**

(51) Int. Cl.⁴: **B65D 67/02**

(30) Priorität: **23.10.87 DE 3735876**

(43) Veröffentlichungstag der Anmeldung:
**17.05.89 Patentblatt 89/20**

(84) Benannte Vertragsstaaten:
**AT BE CH DE ES FR GB GR IT LI LU NL SE**

(71) Anmelder: **Netzer, Karl**
**Bahnhofstrasse 14**
**D-6143 Lorsch(DE)**

(72) Erfinder: **Netzer, Karl**
**Bahnhofstrasse 14**
**D-6143 Lorsch(DE)**

(74) Vertreter: **Ratzel, Gerhard, Dr.**
**Seckenheimer Strasse 36a**
**D-6800 Mannheim 1(DE)**

(54) **Klemmvorrichtung zum lösbaren Verbinden von übereinander und/ oder nebeneinander zu lagernden Fässern.**

(57) Die Erfindung betrifft eine Klemmvorrichtung zum lösbaren Verbinden von übereinander und/oder nebeneinander zu lagernden Fässern, die als aus elastischem Werkstoff bestehende blockförmige Klemmvorrichtung (1) ausgebildet ist, und mindestens zwei offene Einschnitte (6,7) aufweist. Vorzugsweise ist die Klemmvorrichtung quaderförmig ausgebildet; die offenen Einschnitte erweitern sich jeweils nach innen gesehen. Die Erweiterungen (2,3) haben bevorzugtermaßen kreisabschnittförmigen Querschnitt. Vorzugsweise besteht die Klemmvorrichtung aus elastischem Kunststoff. Sie kann an der Bodenfläche eine Krallfläche aufweisen.

Fig.1

EP 0 315 810 A1

# Klemmvorrichtung zum lösbaren Verbinden von übereinander und/oder nebeneinander zu lagernden Fässern

Die Erfindung betrifft eine Vorrichtung zum lösbaren Verbinden von über- und/oder nebeneinander zu lagernden Fässern.

In Fässern werden die verschiedensten Güter und Produkte aufbewahrt und transportiert. Dies können z. B. Flüssigkeiten wie Getränke, Extrakte, Genußgüter oder aber auch aggressive Stoffe wie Säuren und Laugen sein. Je nach den jeweiligen Anforderungen sind die Fässer innen und/oder außen lackiert; sinngemäß das Gleiche gilt für feste Güter und Produkte.

Es hat sich gezeigt, daß die Fässer beim Transport verrutschen und gegeneinander schlagen. Abgesehen von der verkehrstechnischen Gefahr, die sich hierin verbirgt, verbeulen die Fässer, hierbei platzt die Lackierung ab und der Inhalt wird verunreinigt. Diese Nachteile werden auch nicht dadurch vermieden, daß man zwischen die Fässer Zwischenlagen aus Decken oder Pappe einlegt.

Desweiteren weisen solche Fässer gewohnterweise einen oberen und unteren Wulst auf, die ein Übereinanderstapeln nicht erlauben. Somit sind die Ladeflächen von Transportfahrzeugen oder auch Zwischenlagen mit Paletten nur unwirtschaftlich zu nutzen.

Aus der DE-OS 29 26 682 ist eine Abstandshaltevorrichtung bekannt, die sich auf eine Abstandsstrebe für nebeneinanderstehende Fässer bezieht und ein Übereinanderstapeln nicht ermöglicht.

Das DE-GM 78 06 865 bezieht sich auf eine Klammer zum Verbinden von zwei übereinandergestellten Behältern und bildet keine Verbindungsmöglichkeit zweier nebeneinander angeordneter Behälter.

Der Erfindung liegt daher die Aufgabe zugrunde, eine Vorrichtung bereit zu stellen, die eine lösbare Verbindung der Fässer gewährleistet und diese zueinander in Abstand hält, so daß ein Verrutschen und Gegeneinanderschlagen verhindert und ein Übereinanderstapeln und Nebeneinanderlagern ermöglicht.

Diese Aufgabe wird erfindungsgemäß dadurch gelöst, daß die Klemmvorrichtung zum lösbaren Verbinden von Fässern dadurch gekennzeichnet ist, daß die aus elastischem Werkstoff bestehende Klemmvorrichtung blockförmig ausgebildet ist und mindestens zwei offene Einschnitte aufweist.

Eine besonders bevorzugte Ausführungsform ist dadurch gekennzeichnet, daß die Klemmvorrichtung quaderförmig ausgebildet ist.

Eine weitere besonders bevorzugte Ausführungsform ist dadurch gekennzeichnet, daß die offenen Einschnitte sich jeweils nach innen gesehen erweitern; daß die jeweils im Inneren befindliche Erweiterung der Einschnitte kreisabschnittförmigen Querschnitt aufweisen, daß jeweils zwei offene Einschnitte nebeneinanderliegend angeordnet sind.

Eine weitere besonders bevorzugte Ausführungsform besteht darin, daß die Einschnitte aus Bohrungen bestehen.

Eine weitere besonders bevorzugte Ausführungsform ist dadurch gekennzeichnet, daß die Klemmvorrichtung aus elastischem Kunststoff besteht.

Eine besonders bevorzugte Ausführungsform ist dadurch gekennzeichnet, daß die Vorrichtung an der Bodenfläche eine Krallfläche aufweist. Diese Verkrallung ist insbesondere als Verankerung der auf Paletten stehenden Fässer durch das Eigengewicht auf der Palettenoberfläche geeignet.

Eine weitere Einsatzmöglichkeit der mit Krallflächen versehenen Klemmvorrichtung besteht darin, daß die Klemmvorrichtungen auf dem oberen Rand der Fässer aufgesetzt werden, wobei dann die Krallen nach oben weisen und hierdurch durch das Gewicht der daraufliegenden Paletten eine Verkrallung mit der Palettenunterseite erreicht wird.

Eine weitere besonders bevorzugte Ausführungsform besteht darin, daß die Vorrichtung vorzugsweise vier durchgehende mit offenem Einschnitt versehene Bohrungen aufweist, wobei die Bohrungspaare übereinander angeordnet sind.

Eine weitere besonders bevorzugte Ausführungsform besteht darin, daß in Höhe der durchgehenden Bohrungen im Bereich der Wandung je eine parallel zu den Bohrungen verlaufende, vorzugsweise halbkreisförmige Aussparung angeordnet ist.

Eine weitere besonders bevorzugte Ausführungsform ist dadurch gekennzeichnet, daß die durchgehenden Bohrungen und Materialaussparungen das Einklipsen eines Wulstes ermöglichende elastische Nocken bilden.

Eine weitere besonders bevorzugte Ausführungsform besteht darin, daß die mittleren Nocken im Querschnitt pyramidische ausgebildet sind.

Eine weitere besonders bevorzugte Ausführungsform ist dadurch gekennzeichnet, daß die innenliegenden Kanten der Nocken abgerundet ausgebildet sind. Eine weitere besonders bevorzugte Ausführungsform besteht darin, daß zur Durchführung einer Schraube Bohrungen angeordnet sind und daß zur Einführung einer großen Schraubendreherklinge die Nocken mit Materialeinschnitten versehen sind.

Anhand der beigefügten Zeichnungen, die besonders bevorzugte Ausführungsformen der Erfindung zeigen, wird diese nun näher erläutert.

Dabei zeigen:

Figur 1 zeigt die erfindungsgemäße Vorrichtung zum Verbinden von vorzugsweise zwei nebeneinander stehenden Fässern;

Figur 1a zeigt eine Draufsicht aus der in Figur 1 angedeuteten Richtung "A";

Figur 2 die Vorrichtung zum Verbinden von vorzugsweise nebeneinander und übereinander stehenden Fässern;

Figur 3 die schematische Darstellung einer Verbindungskombination;

Figur 4 eine Draufsicht der Figur 3;

Figur 5 die erfindungsgemäße Vorrichtung mit Krallfläche;

Figur 6 eine Ansicht der Krallfläche von der in Figur 5 angedeuteten Richtung "B".

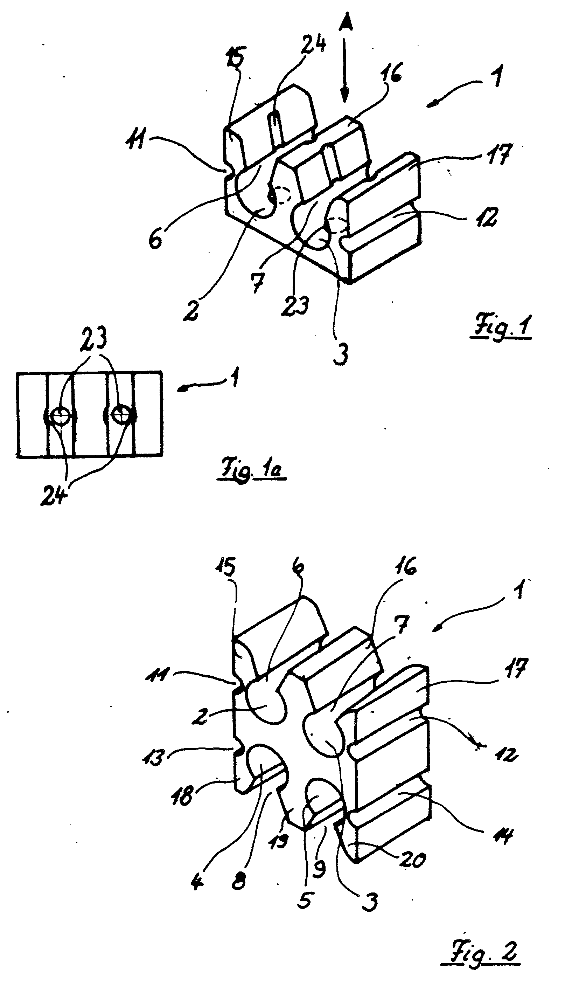

Figur 1 zeigt eine perspektivische Darstellung der erfindungsgemäßen Vorrichtung 1. Dieses Ausführungsbeispiel wird zur Verbindung von nebeneinander angeordneten Fässern am Bodenbereich verwendet; also dort, wo die Fässer auf dem Fahrzeugboden oder auf einer Palette aufsitzen.

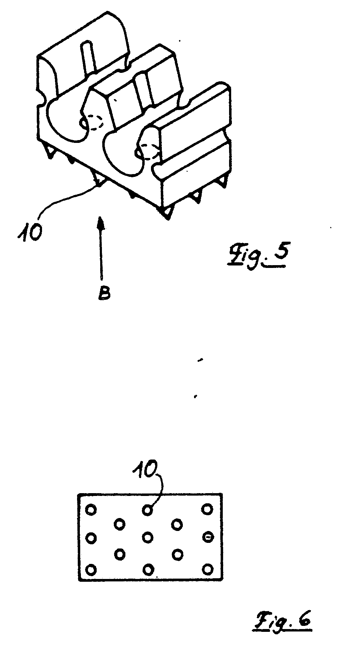

Im Bereich der Bodenfläche sieht ein besonders bevorzugtes Ausführungsbeispiel eine Krallfläche 10 vor, wie sie in den Figuren 5 und 6 dargestellt ist.

Der quaderförmig ausgebildete Körper weist zwei durchgehende Bohrungen 2, 3 auf, die mit je einem offenen Einschnitt 6, 7 versehen sind.

Im Bereich der Wandungen verlaufen parallel zu den Bohrungen 2, 3 je eine halbkreisförmige Aussparung 11, 12. Die Bohrungen 2, 3 sowie die Aussparungen 11, 12 bilden zusammen eine geometrische, beabsichtigte Schwächung, so daß im Material elastische Nocken 15, 16, 17 entstehen, die ein Einklipsen in die wulstförmigen kreisrunden Fassränder ermöglichen. Die so arretierten Fässer werden in einem konstanten Abstand zueinander gehalten, so daß ein Gegeneinanderschlagen unmöglich ist.

Zur Befestigung auf der Bodenfläche bzw. Palette ist die erfindungsgemäße Klemmvorrichtung mit Bohrungen 23 versehen, durch die je eine Schraube geführt werden kann.

Um auch ein Eingreifen von Schraubendrehern mit großer Klinge zu ermöglichen, sind die Nocken 15, 16, 17 mit Materialausnehmungen 24 versehen.

Figur 1a zeigt eine Draufsicht aus der in Figur 1 angedeuteten Richtung "A".

Figur 2 zeigt eine perspektivische Darstellung der Erfindung, die das Verbinden von nebeneinander und übereinander angeordneten Fässern ermöglicht.

Die konstruktiven Ausgestaltungen sind analog zu denen, wie sie bereits in Figur 1 beschrieben sind.

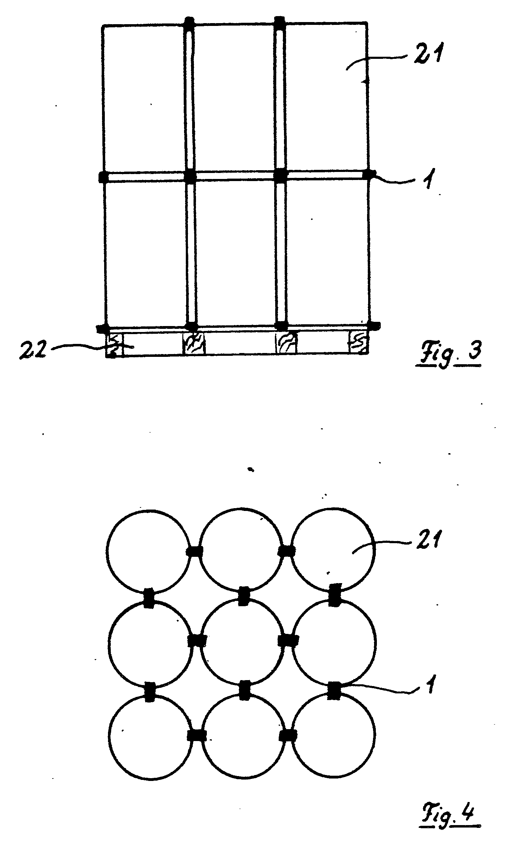

Die Figuren 3 und 4 zeigen schematisch eine Verbindungskombination von Fässern 21, durch die erfindungsgemäße Vorrichtung 1. Es wird hier deutlich, daß diese Kombination beliebig, je nach Platzangebot im Transportfahrzeug erweitert werden kann.

Im Bereich, wo Fässer nebeneinander und übereinander gelagert werden, benutzt man vorzugsweise die Vorrichtungen, wie sie in Figur 2 abgebildet sind.

Die Erfindung stellt eine Vorrichtung dar, die ein sowohl lagertechnisch als auch transporttechnisch gesehen optimales Stapeln von Fässern neben- und übereinander ermöglicht und ist durch seine Lösbarkeit von den Fässern wiederverwendbar.

**Ansprüche**

1. Klemmvorrichtung zum lösbaren Verbinden von über-und/oder nebeneinander zu lagernden Fässern,
dadurch gekennzeichnet,
daß die aus elastischem Werkstoff bestehende Klemmvorrichtung blockförmig ausgebildet ist und mindestens zwei offene Einschnitte (6, 7) aufweist.

2. Klemmvorrichtung nach Anspruch 1,
dadurch gekennzeichnet,
daß die Klemmvorrichtung quaderförmig ausgebildet ist.

3. Klemmvorrichtung nach Anspruch 1 - 2,
dadurch gekennzeichnet,
daß die offenen Einschnitte (6, 7) sich jeweils nach innen gesehen erweitern.

4. Klemmvorrichtung nach Anspruch 3,
dadurch gekennzeichnet,
daß die jeweils im Inneren befindliche Erweiterung der Einschnitte (6, 7) kreisabschnittförmigen Querschnitt (2, 3) aufweisen.

5. Klemmvorrichtung nach Anspruch 1 - 4,
dadurch gekennzeichnet,
daß jeweils zwei offene Einschnitte (6,7) nebeneinanderliegend angeordnet sind.

6. Klemmvorrichtung nach Anspruch 1 - 5,
dadurch gekennzeichnet,
daß die Einschnitte (6, 7) aus Bohrungen bestehen.

7. Klemmvorrichtung nach Anspruch 1 - 6,
dadurch gekennzeichnet,
daß diese aus elastischem Kunststoff besteht.

8. Klemmvorrichtung nach Anspruch 1 - 7,
dadurch gekennzeichnet,
daß die Vorrichtung (1) an der Bodenfläche eine Krallfläche (10) aufweist.

9. Klemmvorrichtung nach Anspruch 1 - 8, dadurch gekennzeichnet, daß die Vorrichtung (1) vorzugsweise vier durchgehende mit offenem Einschnitt (6, 7, 8,9) versehene Bohrungen (2, 3, 4, 5) aufweist, wobei die Bohrungspaare übereinander angeordnet sind.

10. Klemmvorrichtung nach Anspruch 1 - 9, dadurch gekennzeichnet, daß in Höhe der durchgehenden Bohrungen (2 - 5) im Bereich der Wandung je eine parallel zu den Bohrungen (2 - 5) verlaufende, vorzugsweise halbkreisförmige Aussparung (11 - 14) angeordnet ist.

11. Klemmvorrichtung nach Anspruch 1 - 10, dadurch gekennzeichnet, daß die durchgehenden Bohrungen (2 - 5) und Materialaussparungen (11- 14), das Einklipsen eines Wulstes ermöglichende elastische Nocken (15 - 20 ) bilden.

12. Klemmvorrichtung nach Anspruch 1 -11, dadurch gekennzeichnet, daß die mittleren Nocken (16, 19) im Querschnitt pyramidisch ausgebildet sind.

13. Klemmvorrichtung nach Anspruch 1 - 12, dadurch gekennzeichnet, daß die innenliegenden Kanten der Nocken (15, 17, 18, 20) abgerundet ausgebildet sind.

14. Klemmvorrichtung nach Anspruch 1 -13, dadurch gekennzeichnet, daß zur Durchführung einer Schraube, Bohrungen (23) angeordnet sind.

15. Klemmvorrichtung nach Anspruch 1 - 14, dadurch gekennzeichnet, daß zur Einführung einer großen Schraubendreherklinge die Nocken (15, 16, 17) mit Materialeinschnitten (24) versehen sind.

15  24  16  1

11

6

2  7  23  3

17

12

*Fig. 1*

23

24

1

*Fig. 1a*

15  6  16  1

7

11

2  17

13  12

18  14

4  8  5  9  3  20  13

*Fig. 2*

_Fig. 3_

22

21

1

_Fig. 4_

21

1

10

_Fig. 5_

B

10

_Fig. 6_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-1 934 663 (SCHÖNGEN) * Seite 4, Absatz 8 - Seite 5, letzter Absatz; Figuren 1,2 * | 1-5,7, 10-14 | B 65 D 67/02 |
| Y | | 9 | |
| A | | 6,15 | |
| | --- | | |
| A | US-A-2 629 910 (IMPARATO) * Spalte 1, Zeilen 1-11; Figur 1 * | 1 | |
| | --- | | |
| A | US-A-3 480 136 (POUPITCH) * Spalte 3, Zeile 70 - Spalte 4, Zeile 8; Figuren 8,9 * | 1 | |
| | --- | | |
| Y | GB-A- 893 448 (BRITISH OXYGEN CO.) * Seite 2, Zeilen 95-98; Figur 5 * | 9 | |
| | --- | | |
| A | US-A-3 576 304 (GILLEMOT) * Zusammenfassung; Figur 7 * | 8 | |
| | ----- | | |

RECHERCHIERTE SACHGEBIETE (Int. Cl.4)

B 65 D
F 16 B
F 16 L

Der vorliegende Recherchenbericht wurde für alle Patentansprüche erstellt

| Recherchenort | Abschlußdatum der Recherche | Prüfer |
|---|---|---|
| DEN HAAG | 24-02-1989 | BRIDAULT A.A.Y. |